(19) Europäisches Patentamt / European Patent Office / Office européen des brevets

(11) **EP 2 917 705 B1**

(12) **FASCICULE DE BREVET EUROPEEN**

(45) Date de publication et mention de la délivrance du brevet:
**16.10.2024 Bulletin 2024/42**

(21) Numéro de dépôt: **13805444.0**

(22) Date de dépôt: **31.10.2013**

(51) Classification Internationale des Brevets (IPC):
**G01F 25/00** (2022.01)    **G01F 1/88** (2006.01)
**F02C 9/18** (2006.01)    **F02C 6/08** (2006.01)
**B64D 13/00** (2006.01)    **G01F 25/10** (2022.01)

(52) Classification Coopérative des Brevets (CPC):
**B64D 13/00; F02C 6/08; G01F 1/88; G01F 25/15;**
Y02T 50/50

(86) Numéro de dépôt international:
**PCT/FR2013/052608**

(87) Numéro de publication internationale:
**WO 2014/072619 (15.05.2014 Gazette 2014/20)**

(54) **PROCEDE ET SYSTEME DE DETERMINATION DE DEBIT D'AIR PRELEVE SUR UN MOTEUR D'AERONEF**

VERFAHREN UND SYSTEM ZUR BESTIMMUNG DER DURCHFLUSSRATE VON AUS EINEM FLUGZEUGTRIEBWERK GESAMMELTER LUFT

METHOD AND SYSTEM FOR DETERMINING THE FLOW RATE OF AIR COLLECTED FROM AN AIRCRAFT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2012 FR 1260632**
**09.11.2012 FR 1260630**

(43) Date de publication de la demande:
**16.09.2015 Bulletin 2015/38**

(73) Titulaire: **Safran Aircraft Engines**
**75015 Paris (FR)**

(72) Inventeurs:
• **GAULLY, Bruno, Robert**
**F-77550 Moissy-cramayel Cedex (FR)**
• **CABRET, Vincent**
**F-77550 Moissy-crameyel Cedex (FR)**
• **OLIVIER, Amaury**
**F-77550 Moissy-cramayel Cedex (FR)**
• **SEBAA, Jérôme, Guy, Roger**
**F-77550 Moissy-cramayel Cedex (FR)**

(74) Mandataire: **Brevalex**
**Tour Trinity**
**1 B Place de la Défense**
**92400 Courbevoie (FR)**

(56) Documents cités:
**EP-A1- 0 507 725    EP-A2- 1 116 655**
**EP-B1- 1 444 428    WO-A2-2009/094734**

## Description

### DOMAINE TECHNIQUE

La présente invention concerne l'évaluation de débit d'air prélevé sur un moteur d'aéronef dont la connaissance permet d'assurer la bonne opérabilité du moteur.

### ÉTAT DE LA TECHNIQUE ANTÉRIEURE

De façon connue, un aéronef a besoin de prélever de l'air sur au moins un moteur pour par exemple pressuriser sa cabine ou dégivrer ses ailes. Or, le prélèvement de l'air a un impact sur le pilotage du moteur et donc sur la régulation en débit de carburant.

En effet, le débit d'injection du carburant doit être augmenté en cas de prélèvement d'air pour pouvoir assurer la même poussée du moteur. On notera que la régulation du débit d'injection de carburant est assurée par une boucle de régulation qui vise à s'assurer que le débit de carburant injecté dans la chambre de combustion, en phase d'accélération ou de décélération, ne dépasse pas une certaine valeur limite au-delà de laquelle un dysfonctionnement du moteur peut être rencontré.

En effet, pour opérer un moteur d'aéronef et plus particulièrement son compresseur haute pression HP, on implémente une valeur seuil de protection appelée butée d'accélération.

La butée d'accélération est déterminée à partir de limites portant sur le ratio $C/P_c$ du débit carburant C injecté dans la chambre de combustion sur la pression statique $P_c$ mesurée en sortie de la chambre de combustion. Ces limites sont fixées, de façon connue en soi, pour se préserver d'un pompage en accélération et d'une extinction du moteur en décélération.

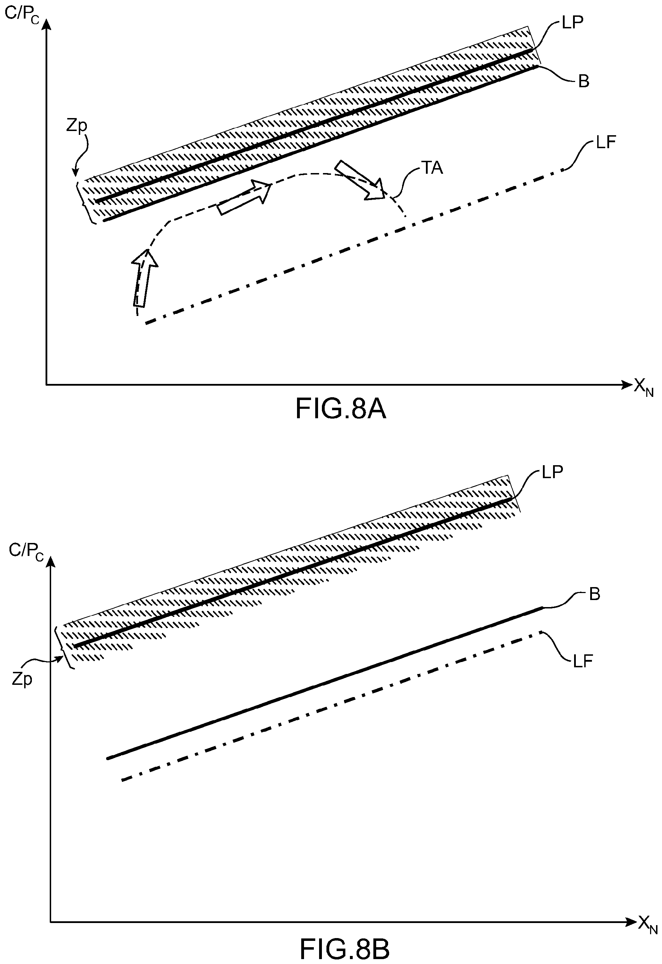

Les Figs. 8A-8D représentent les variations du ratio $C/P_c$ en fonction du régime normalisé $X_N$ du compresseur selon différentes configurations.

Sur la Fig. 8A, la courbe LP représente la ligne de pompage du moteur et ZP la zone dans laquelle un risque de pompage existe. La courbe B représente la butée d'accélération et la courbe LF (en pointillés) représente la ligne de fonctionnement. La courbe TA représente une trajectoire d'accélération requise par le moteur.

Cette représentation dans le plan $(C/P_c, X_N)$ permet d'avoir une image du fonctionnement intrinsèque du compresseur HP grâce à des paramètres $C/P_c$ et $X_N$ mesurables. En particulier, la butée d'accélération B traduit le pilotage et la protection du compresseur contre le pompage.

Cependant, les prélèvements d'air sur le compresseur HP modifient la représentation dans le plan $(C/P_c, X_N)$ comme illustré sur la Fig. 8B.

En effet, la Fig. 8B montre que pour maintenir la puissance, les prélèvements d'air sont compensés par plus de carburant dans la chambre de combustion, ce qui fait monter la ligne de fonctionnement LF et la ligne de pompage en $C/P_c$. En revanche, la butée d'accélération B qui est calculée en fonction du régime normalisé $X_N$ reste indépendant des prélèvements d'air.

En conséquence, l'écart entre la ligne de fonctionnement LF et la butée d'accélération B se réduit proportionnellement au prélèvement d'air. Ainsi, la marge entre la ligne de fonctionnement LF et la ligne de butée B représentant la capacité du moteur à accélérer est dégradée lors des prélèvements d'air. On risque même d'avoir un dévissage sur le moteur qui peut aller jusqu'à son extinction.

Il est donc nécessaire de recalculer la butée B pour être en concordance avec le nouvel état du compresseur engendré par le prélèvement d'air afin de conserver une bonne marge d'accélération. Toutefois, il est important de ne pas surestimer le débit d'air prélevé pour ne pas sur-corriger la butée B.

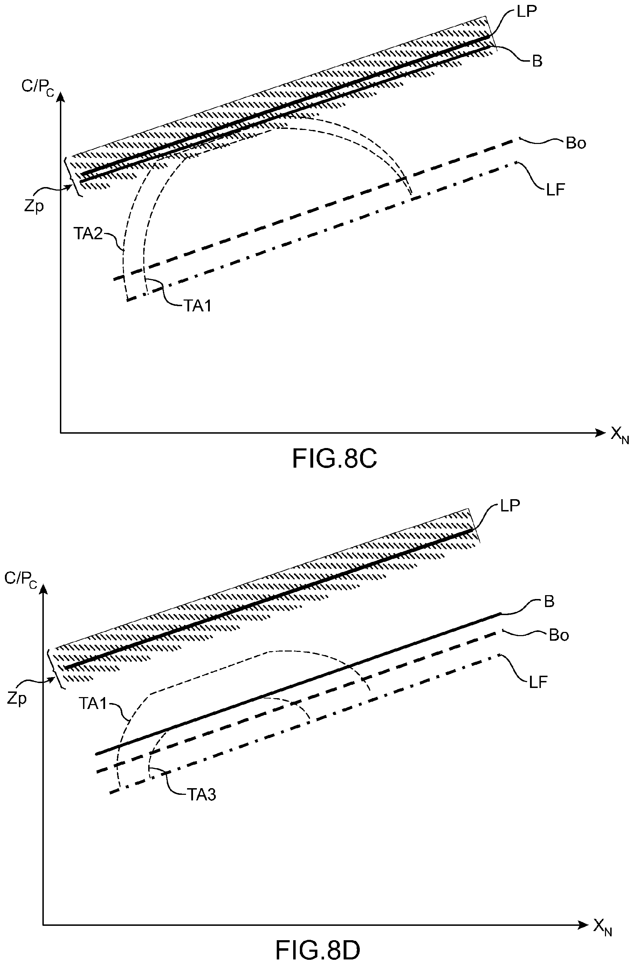

En effet, la Fig. 8C représente les différentes courbes dans le plan $(C/P_c, X_N)$ selon une situation de surestimation du débit d'air prélevé.

Une première trajectoire d'accélération TA1 montre la limite d'accélération requise par le moteur et une deuxième trajectoire d'accélération TA2 montre la limite d'accélération engendrée par la surestimation du débit d'air. La courbe $B_0$ représente l'ancienne butée d'accélération.

Cette figure montre que la surestimation du débit d'air conduit à une butée B d'accélération trop rehaussée pouvant entrer dans la zone de pompage ZP. Ainsi, une surestimation du débit prélevé peut conduire à une perte de la protection de pompage lors d'une accélération (courbe TA2).

Par ailleurs, la Fig. 8D montre qu'une sous-estimation du débit prélevé va dans le même sens qu'une absence de correction de la butée B. La sous-estimation du débit d'air conduit à une butée B pas suffisamment rehaussée, encore trop proche de la ligne de fonctionnement LF. Comme le moteur a besoin d'augmenter l'injection du carburant afin de maintenir le même régime moteur, on risque de faire dévisser le moteur (courbe d'accélération TA3).

Ainsi, l'opérabilité du moteur ne peut être assurée qu'avec une bonne connaissance des prélèvements d'air effectués sur ce moteur.

On notera que dans le cadre d'un moteur pour un avion de ligne classique, les prélèvements d'air sont déterminés en fonction de l'altitude à partir des tables de consignes fournies par l'avionneur.

En revanche, dans le cadre d'une nouvelle génération de moteurs et d'aéronefs, il n'est pas possible de préétablir une table de débit d'air. En effet, les nouveaux moteurs optimisent le rendement du compresseur et diminuent la consommation du carburant et cela nécessite une meilleure précision sur l'estimation du niveau de prélèvement d'air. En outre, afin d'éviter des modes de dysfonctionnement commun entre des moteurs sur un même aéronef, les données utilisées par ces types de moteurs sont de plus en plus indépendantes de celles de l'aéronef. De même, pour les nouveaux aéronefs, les besoins de prélèvement d'air pour le dégivrage se sont complexifiés et multipliées. Dans ces cas, le débit d'air prélevé sur le moteur est calculé selon un modèle analytique. On notera que le débit d'air peut varier sur une plage allant d'environ 10kg/min jusqu'à environ 100kg/min.

Cependant, un manque de précision sur la connaissance du débit d'air prélevé peut ainsi avoir un impact sur l'opérabilité du moteur.

Plusieurs systèmes pour l'évaluation du débit d'air dans les moteurs ont été documentés, notamment dans les demandes de brevets ou brevets EP1116655, EP0507725, WO2009/094734 et EP1444428. Cependant, ces références révèlent des lacunes similaires, soulignant des inconvénients communs abordés ci-dessus. L'objet de la présente invention est de remédier aux inconvénients précités en proposant un procédé et un système de détermination avec précision et en temps réel du débit d'air prélevé sur le moteur permettant une amélioration de l'opérabilité du moteur.

**EXPOSÉ DE L'INVENTION**

La présente invention est définie par les revendications jointes.

Le procédé selon l'invention permet d'optimiser les informations issues des tables de débit fournies par l'avionneur et les estimations issues des mesures des différentes grandeurs physiques afin de connaître avec une précision suffisante le débit d'air prélevé sur la totalité du domaine envisageable de débit d'air. Cette précision de connaissance permet ensuite de corriger la butée d'accélération de manière efficace.

Avantageusement, la sélection comporte la sélection de la valeur la plus grande entre ladite première estimation courante du débit d'air et ladite donnée courante de débit d'air minimale.

Ceci permet de déterminer le débit d'air avec simplicité et une bonne précision sur toute l'échelle.

Avantageusement, le procédé comporte une détermination audit instant courant d'une troisième estimation courante du débit d'air en augmentant ladite deuxième estimation courante du débit d'air par une valeur courante supplémentaire de débit d'air nacelle antigivrage prélevé sur le moteur.

Ceci permet de corriger davantage l'estimation courante du débit d'air en optimisant les informations non déterministes du débit d'air antigivrage.

Avantageusement, le procédé comporte une consolidation desdites mesures de grandeurs physiques avant l'évaluation de ladite première estimation courante du débit d'air.

Ceci permet de s'assurer de la validité des mesures avant de les utiliser pour évaluer le débit d'air prélevé sur le moteur.

Avantageusement, l'évaluation de ladite première estimation courante comporte les étapes suivantes :

- calcul audit instant courant d'une estimation courante intermédiaire du débit d'air prélevé sur le moteur d'aéronef en fonction desdites mesures de grandeurs physiques,
- calcul audit instant courant d'une erreur courante de débit engendrée par des imprécisions relatives auxdites mesures de grandeurs physiques, et
- correction audit instant courant de ladite estimation courante intermédiaire du débit d'air en lui soustrayant ladite erreur courante de débit déterminant ainsi ladite première estimation courante du débit d'air.

Ceci permet de s'assurer de ne jamais surestimer la valeur du débit d'air prélevée et permet donc de décaler au maximum la butée de régulation sans prendre le risque de pompage lors d'un prélèvement d'air sur le moteur.

Avantageusement, la perte de charge est mesurée aux bornes d'un échangeur thermique dudit système de prélèvement d'air.

Ceci permet d'augmenter la précision de l'évaluation du débit d'air sachant que l'échangeur thermique présente la perte de charge la plus grande.

Avantageusement, lesdites tables de débit sont des consignes de prélèvement d'air pour le conditionnement de la cabine de l'aéronef et ladite donnée courante de débit d'air minimale est définie en fonction de la configuration sélectionnée dans lesdites tables de débit et de l'altitude de l'aéronef.

Le procédé selon l'invention est un procédé de contrôle d'un moteur d'aéronef, comprenant :

- une estimation en temps réel du débit d'air prélevé sur un moteur d'aéronef selon l'une quelconque des caractéristiques précédentes, et

- un ajustement d'une valeur seuil courante de débit carburant dudit moteur en tenant compte de la première, la seconde ou la troisième estimation courante du débit d'air de manière à conserver une marge d'accélération.

Ceci permet de corriger en temps réel et de manière efficace la butée de régulation de carburant sans prendre le risque de pompage.

L'invention vise également un système de contrôle d'un moteur d'aéronef selon la revendication 8.

L'invention vise aussi un calculateur de contrôle d'un moteur d'aéronef configuré pour implémenter le procédé de détermination selon les caractéristiques ci-dessus.

## BRÈVE DESCRIPTION DES DESSINS

La Fig. 1 illustre de manière schématique un système de prélèvement d'air d'un moteur d'aéronef, selon l'invention ;

La Fig. 2 illustre de manière schématique un procédé et un dispositif de détermination en temps réel du débit d'air prélevé sur le moteur, selon l'invention ;

La Fig. 3 est un graphique représentant de manière schématique des consignes de débit d'air ;

La Fig. 4 montre la dispersion des erreurs commises lors de l'évaluation d'une estimation du débit d'air, selon l'invention ;

La Fig. 5 montre la correction apportée par l'hybridation lorsque le débit calculé est dispersé bas, selon l'invention ;

La Fig. 6 est un schéma-bloc illustrant des étapes d'estimations en temps réel du débit d'air prélevé sur le moteur, selon différents modes de réalisation de l'invention ;

La Fig. 7 est un graphique montrant les erreurs commises en fonction du débit d'air prélevé ; et

Les Figs. 8A-8D représentent les variations de la butée d'accélération en fonction du régime du moteur.

## EXPOSÉ DÉTAILLÉ DE MODES DE RÉALISATION PARTICULIERS

Le concept à la base de l'invention consiste à confronter en temps réel différentes sources d'information sur le débit d'air prélevé sur le moteur d'aéronef pour déterminer une estimation précise du débit d'air afin de bien corriger la butée d'accélération et par conséquent, d'améliorer l'opérabilité et la protection du moteur.

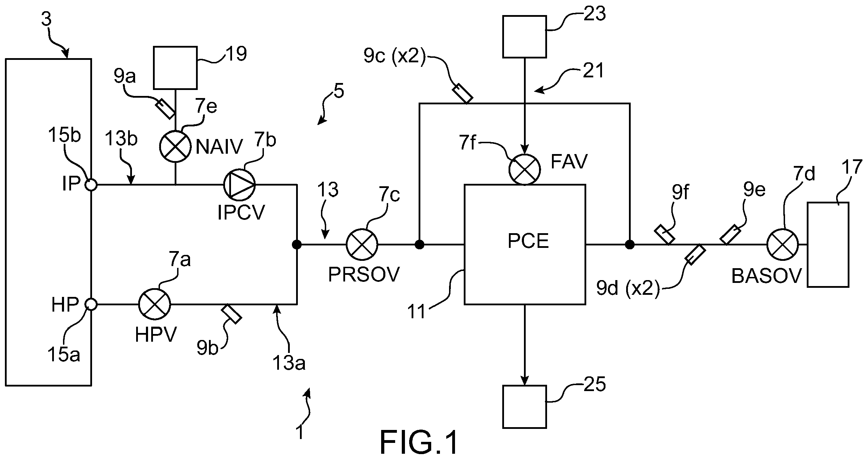

La Fig. 1 illustre de manière schématique un système de prélèvement d'air d'un moteur d'aéronef, selon l'invention.

Le système de prélèvement d'air « BAS » (Bleed Air System) 1 est compris dans le système propulsif (moteur et nacelle) de l'aéronef et vise à prélever l'air sur le compresseur 3 haute pression HP du moteur pour le délivrer ensuite à l'aéronef ou à l'entrée du moteur.

En effet, le système de prélèvement d'air (BAS) 1 comporte un circuit 5 de distribution d'air comprenant des vannes 7a-7f, des capteurs 9a-9f, un échangeur thermique 11, et un ensemble de canaux 13 reliant des premier et deuxième ports 15a, 15b de prélèvement d'air sur le compresseur 3 HP à d'une part un système de distribution pneumatique 17 de l'aéronef et d'autre part à une nacelle anti-givrage 19 du moteur. Le premier port 15a de prélèvement d'air est un port de haute pression (dit port HP) du compresseur 3 tandis que le deuxième port 15b de prélèvement d'air est un port de pression intermédiaire (dit port IP) du compresseur 3.

Une première vanne 7a, dite vanne « HPV » (High Pressure Valve, ou vanne de haute pression), est montée sur une première branche (canal 13a) du circuit 5 dont l'une des extrémités est connectée au port HP du compresseur 3. Une deuxième vanne 7b, dite vanne « IPCV » (Intermediate Port Check Valve, ou vanne passive) est montée sur une deuxième branche (canal 13b) du circuit 5 dont l'une des extrémités est connectée au port IP du compresseur 3. Les autres extrémités des première 13a et deuxième 13b branches sont connectées via une troisième vanne 7c, dite vanne PRSOV (Pressure Shut Off Valve, ou vanne d'isolement de pression) à l'entrée de l'échangeur thermique 11 de pré-refroidissement « PCE » (Precooler).

On notera que la vanne PRSOV 7c peut être commandée pour saturer le niveau de pression à l'interface aéronef ou pour couper la livraison d'air à l'aéronef.

La sortie de l'échangeur thermique PCE 11 est connecté via une quatrième vanne 7d, dite vanne « BASOV » (Bleed Air Shut Off Valve, ou vanne de coupure de prélèvement) au système de distribution pneumatique 17 de l'aéronef.

Par ailleurs, la deuxième branche 13b du circuit 5 est aussi connectée via une cinquième vanne 7e, dite vanne « NAIV » (Nacelle Anti Ice Valve, ou vanne anti-givrage) à la nacelle anti givrage 19 de l'entrée du moteur. La vanne NAIV 7e est destinée à commander l'activation du dégivrage de l'entrée d'air du moteur et est surveillée par un premier capteur 9a de pression, dit capteur-PNAI.

On notera que la vanne HPV 7a en conjonction avec la vanne IPCV 7b permettent de définir le port 15a, 15b de prélèvement d'air. Ainsi, lorsque la vanne HPV 7a est ouverte, l'air est prélevé sur le port 15a (port HP) et la vanne IPCV 7b est fermée par la pression. A l'inverse, lorsque la vanne HPV 7a est fermée, l'air est prélevé sur le port 15b (port IP). En outre, un deuxième capteur 9b de pression, dit capteur-PHPV, est monté sur la première branche 13a pour surveiller la vanne HPV 7a.

L'échangeur 11 thermique air/air PCE est un radiateur qui permet de réguler la température de l'air à l'interface de l'aéronef. En effet, le PCE 11 est connecté via une sixième vanne 7f « FAV » (Fan Air Valve, ou vanne d'air de la soufflante) à un autre circuit 21 d'air prélevant de l'air sur la soufflante (Fan) 23 du moteur et le rejetant sur un port de sortie 25 de la nacelle. La vanne FAV 7f permet de moduler le débit d'air prélevé sur la soufflante 23 afin de refroidir l'air dans le circuit 5 de distribution destiné à l'aéronef.

En outre, d'autres capteurs sont installés dans le système 1 de prélèvement d'air (BAS) pour mesurer des grandeurs physiques spécifiques au prélèvement d'air. En particulier, une paire de troisièmes capteurs 9c de pression différentielle, dits capteurs-DPBAS sont connectés aux bornes du PCE 11 pour mesurer la perte de charge selon deux voies indépendantes. On notera que le fait de mesurer la perte de charge à l'endroit où elle est la plus grande (*i.e.* dans le PCE) permet d'augmenter la précision de l'estimation de débit d'air prélevé. En outre, en mesurant la perte de charge aux bornes du PCE 11 on évite l'insertion d'un organe déprimogène aux bornes duquel on mesurerait la perte de charge. Un organe déprimogène aurait nécessité une augmentation de la pression aux niveaux des ports de prélèvement 15a, 15b ce qui aurait dégradé la performance du moteur en augmentant la consommation en carburant. De plus, un tel organe aurait engendré un surcroît de masse et de volume du PCE 11 afin de compenser une augmentation de température aux niveaux des ports de prélèvement 15a, 15b.

Par ailleurs, trois capteurs de température 9d, 9e, dits capteurs-TBAS, sont montés à l'aval (*i.e.* à la sortie) du PCE 11 pour mesurer et surveiller la température de l'air à l'interface de l'aéronef. Finalement, un quatrième capteur de pression 9f simplex, dit capteur-PBAS, est monté aussi à l'aval du PCE 11 pour mesurer la pression à la sortie du PCE 11 et surveiller le bon fonctionnement de la vanne PRSOV 7c à l'interface de l'aéronef.

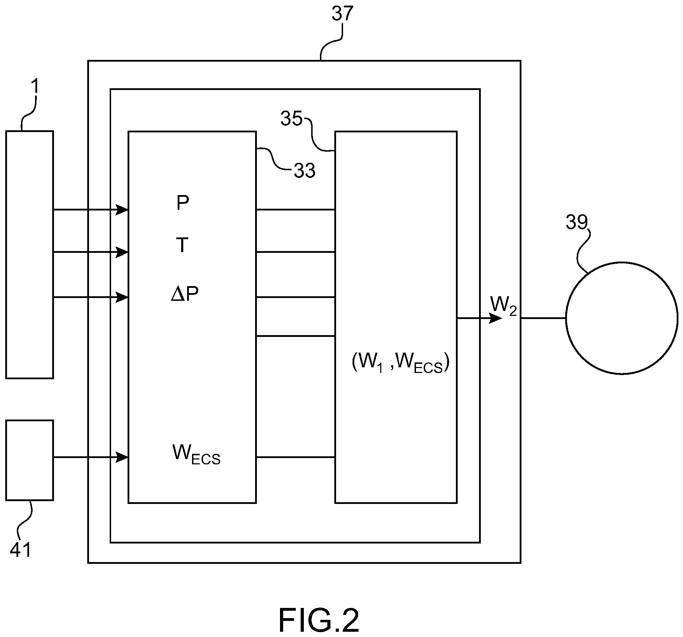

La Fig. 2 illustre de manière schématique un dispositif de détermination en temps réel du débit d'air prélevé sur le moteur, selon l'invention. La Fig. 2 illustre également le procédé d'estimation en temps réel du débit d'air, selon l'invention.

Le dispositif de détermination 31 est un module numérique comprenant des moyens d'acquisition 33 et des moyens de calcul 35, intégré à un calculateur 37 de régulation ou de contrôle (par exemple le FADEC) d'un moteur 39 d'aéronef. Plus particulièrement, le dispositif de détermination 31 comporte un programme d'ordinateur conforme à l'invention comprenant des instructions de code adaptées à la mise en oeuvre des étapes du procédé d'estimation selon l'invention, stocké par exemple dans une mémoire du calculateur 37 de contrôle du moteur 39.

Les moyens d'acquisition 33 sont configurés pour acquérir à des instants successifs les mesures de grandeurs physiques en provenance des capteurs installés dans le système de prélèvement d'air (BAS) 1. Ces mesures comportent des mesures initialement destinées à surveiller le système BAS 1, en particulier, les mesures de température $T$ fournies par les capteurs 9e, 9d de température et les mesures de pression $P$ fournies par le capteur 9f de pression. Elles comportent également des mesures de perte de charge $\Delta P$ aux bornes de l'échangeur thermique (PCE) 11 fournies par les capteurs 9c de pression différentielle.

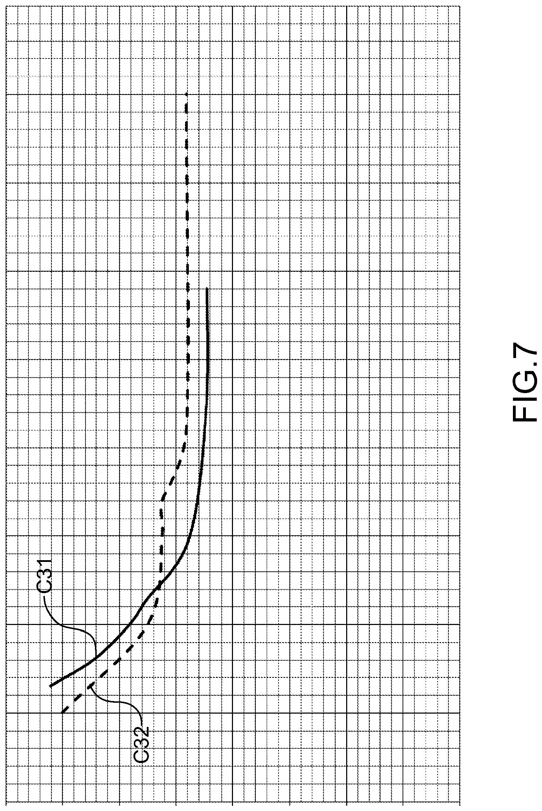

Avantageusement, les mesures de grandeurs physiques peuvent être consolidées avant de les utiliser pour évaluer le débit d'air prélevé sur le moteur (voir Fig. 7).

On notera que des essais expérimentaux d'étalonnage réalisé sur l'échangeur PCE 11 ont permis d'établir une formule empirique exprimant le débit massique $W$ de prélèvement d'air en fonction de la perte de charge $\Delta P$ dans le PCE 11 ainsi que la température $T$ et la pression $P$ à la sortie du PCE 11, selon la formule suivante :

$$k \times W^{\alpha} = \Delta P \times \left( \frac{P + \frac{\Delta P}{2}}{T} \right) \qquad (1)$$

les paramètres $\alpha$ et $k$ sont des constantes expérimentales déterminées à partir des essais d'étalonnage réalisés sur l'échangeur PCE 11.

Ainsi, afin d'estimer le débit massique en temps réel, les moyens de calcul 35 évaluent à chaque instant courant des instants successifs une première estimation courante $W_1$ du débit d'air massique prélevé sur le moteur 39 d'aéronef sur la base des mesures de perte de charge $\Delta P$, de pression $P$ et de température $T$ recueillies par les moyens d'acquisition 33.

Avantageusement, la première estimation courante $W_1$ peut prendre en compte les erreurs engendrées par les imprécisions relatives aux mesures de grandeurs physiques (voir Fig. 7).

En outre, les moyens d'acquisition 33 sont configurés pour acquérir à chaque instant courant une donnée courante de débit d'air minimale $W_{ECS}$ en provenance d'un module 41 électronique de l'aéronef. La donnée courante de débit d'air minimale $W_{ECS}$ est définie à partir des tables de débit prédéterminées en relation avec la climatisation de la cabine ECS (Environnemental Control System).

Les tables de débit sont des configurations prédéterminées par l'avionneur qui expriment des consignes de débit de prélèvement d'air ECS pour la cabine de l'aéronef en fonction de l'altitude. Ces tables ne prennent en compte que le débit d'air prélevé pour la cabine et correspondent donc à des données de débit d'air minimal.

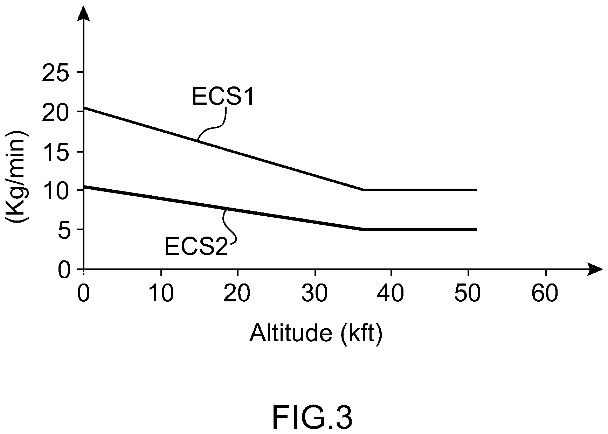

La Fig. 3 est un graphique représentant de manière schématique des consignes de débit d'air ECS. Ce graphique représente un exemple de variation du débit d'air (en kg/min) en fonction de l'altitude (en kilo-pied kft). La courbe ECS1 représente les consignes de débit en fonction de l'altitude dans une configuration de prélèvement d'air sur un moteur, dit « Mono flux » (Mono Flow). La courbe ECS2 représente les consignes de débit dans une configuration de prélèvement d'air sur deux moteurs, dit « Dual flux » (Dual Flow).

Par ailleurs, le module 41 électronique de l'aéronef comporte des moyens d'entrée 411 et des moyens de reconstitution 413. Les moyens d'entrée 411 sont destinés à recevoir des données relatives à l'altitude Alt de l'aéronef et à la commande Cd de la configuration de prélèvement d'air sélectionnée. Les moyens de reconstitution 413 sont destinés à reconstituer la consigne de débit d'air à partir des tables de débit prédéterminées et de l'altitude.

Ainsi, suivant la commande Cd opérée dans le cockpit par un pilote de l'aéronef pour sélectionner la configuration de prélèvement, et suivant l'altitude Alt courante de l'aéronef, les moyens de reconstitution 413 reconstituent avec certitude le débit d'air à prélever sur le(les) moteur(s) pour le conditionnement de la cabine et fournissent donc la donnée courante de débit d'air minimale $W_{ECS}$ aux moyens d'acquisition 33.

Les moyens de calcul 35 effectuent alors à l'instant courant une hybridation de la première estimation courante $W_1$ du débit d'air et de la donnée courante de débit d'air minimale $W_{ECS}$ pour former une deuxième estimation courante $W_2$ du débit d'air.

L'hybridation consiste par exemple à sélectionner sur différents intervalles l'une ou l'autre des informations (i.e., première estimation ou donnée de débit d'air minimale), en fonction du niveau de précision ou de fiabilité de chacune des informations.

Plus particulièrement, on notera que la première estimation du débit d'air n'est pas exploitable à faible débit. En effet, à faible débit la mesure de la perte de charge aux bornes du PCE 11 est du même ordre de grandeur que la précision du capteur de pression différentielle. L'erreur étant en pourcentage de la pleine échelle, il n'est ainsi pas possible à la fois de mesurer les faibles débits (en mesurant les pertes de charge) et de couvrir toute l'échelle.

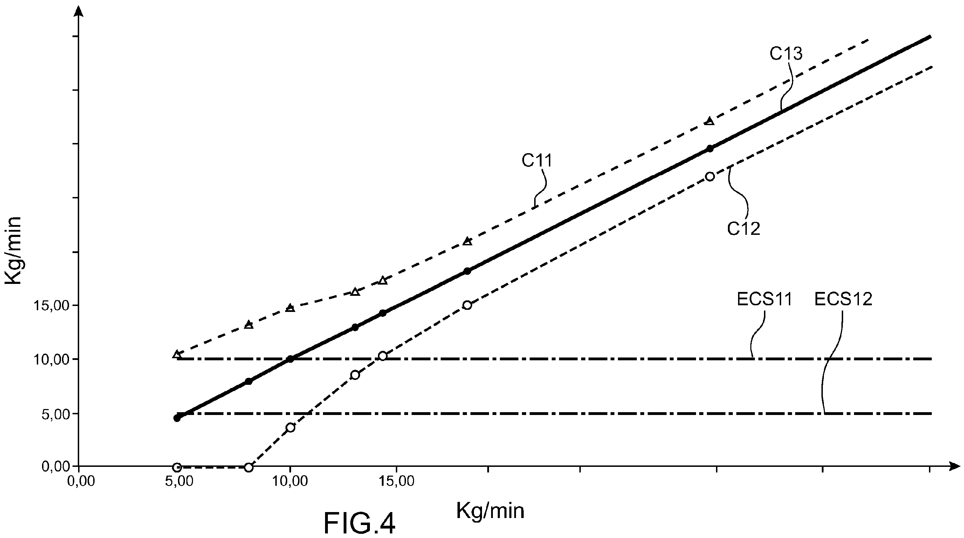

En effet, la Fig. 4 montre de manière très schématique la dispersion des erreurs commises lors de l'évaluation de la première estimation du débit d'air.

L'axe des abscisses correspond au débit réel de prélèvement d'air en kg/min et l'axe des ordonnées correspond au débit de prélèvement d'air en kg/min estimé à partir des mesures de la perte de charge.

Les courbes en pointillées C11 et C12 correspondent respectivement aux mesures dispersées hautes et basses délimitant une première zone de premières estimations $W_1$ de débit d'air. La courbe C13 représente les mesures nominales de débit d'air.

Les courbes horizontales ECS11 et ECS12 représentent les données de débit d'air minimales ECS (par exemple, à environ 44kft) pour les configurations Mono flux et Dual flux respectivement.

Ces courbes montrent qu'à faible débit l'erreur commise sur la mesure de débit est comparable à la mesure elle-même. En particulier pour les mesures dispersées basses le débit devient non nul que lorsque la mesure de débit devient supérieure à son erreur, comme illustré sur la courbe C12. A titre d'exemple, pour un débit réel de 7 kg/min, l'estimation de débit calculé peut indiquer 0 kg/min ou 14 kg/min. Ainsi, la première estimation de débit d'air n'est pas exploitable à faible débit.

Avantageusement, l'hybridation consiste alors à sélectionner la valeur la plus grande entre la première estimation courante $W_1$ du débit d'air et la donnée courante de débit d'air minimale $W_{ECS}$. Ainsi, la mesure de débit est saturée par valeur basse à la valeur de débit minimale. Autrement dit, la première estimation courante est sélectionnée dans le domaine des débits importants (par exemple, supérieur à 15kg/min) tandis que la donnée courante de débit d'air minimale $W_{ECS}$ est sélectionnée dans le domaine des débits faibles (par exemple, inférieur à 15kg/min).

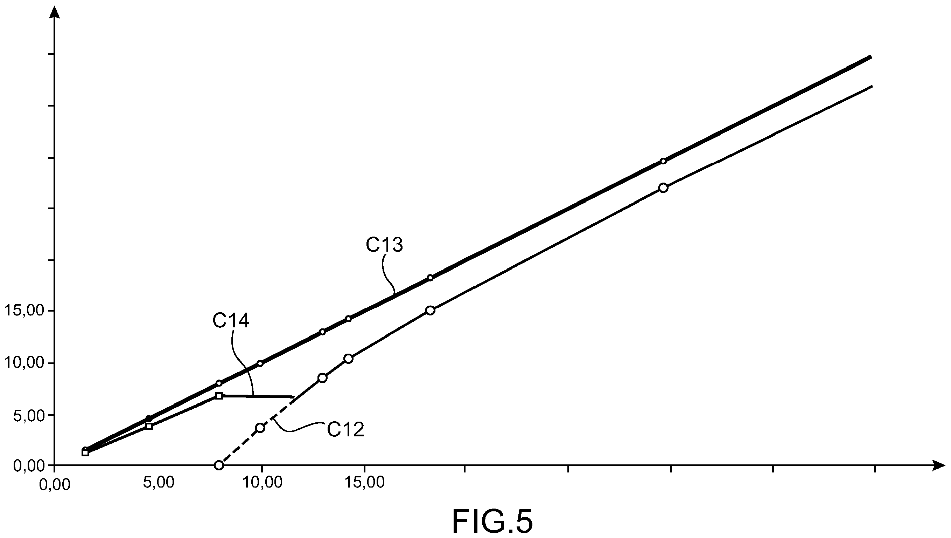

La Fig. 5 montre de manière très schématique la correction apportée par l'hybridation lorsque le débit calculé est dispersé bas.

La courbe C13 est la même que celle de la Fig. 4 et représente donc la courbe nominale. La courbe C14 représente la correction apportée aux mesures basses et correspond à une juxtaposition entre les données de débit d'air minimales $W_{ECS}$ dans le domaine des faibles débits et les premières estimations $W_1$ du débit d'air dans le domaine complémentaire.

On notera que le débit réel peut comprendre le débit d'air nacelle antigivrage WAI non pris en compte par les données de débit d'air minimales et les estimations du débit d'air.

Avantageusement, afin de tenir compte du débit d'air nacelle, les moyens de calcul 35 évaluent une troisième estimation courante du débit d'air en augmentant la deuxième estimation courante $W_2$ du débit d'air par une valeur courante supplémentaire de débit d'air nacelle antigivrage prélevé sur le moteur.

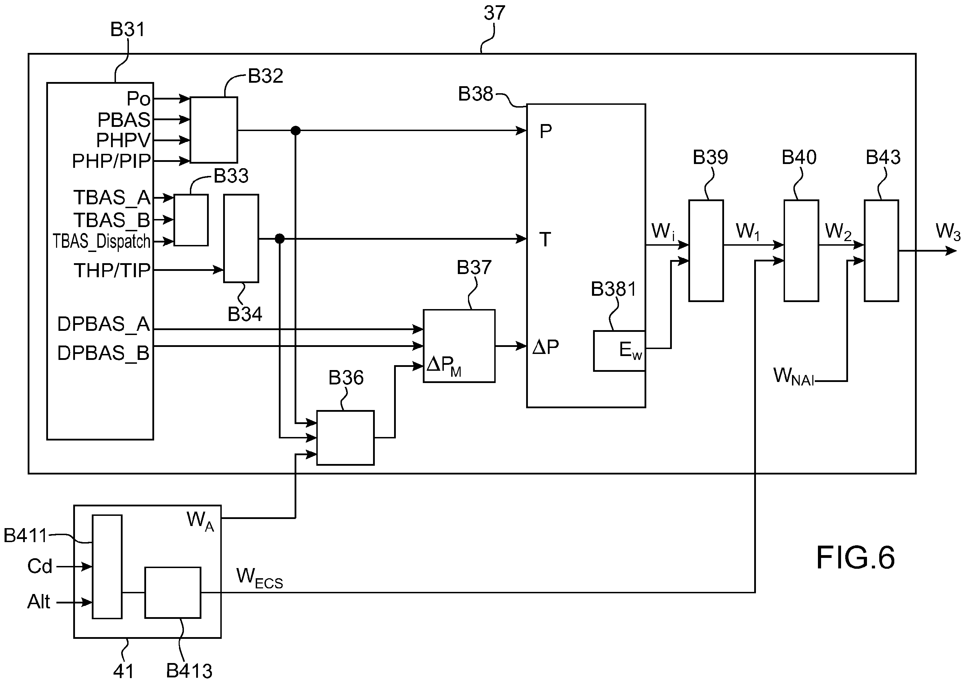

La Fig. 6 illustre un schéma-bloc des estimations en temps réel du débit d'air prélevé sur le moteur, selon des modes avantageux de réalisation de l'invention.

Les opérations décrites par le schéma bloc sont implémentées par le dispositif de détermination intégré dans le calculateur 37 contrôlant le moteur 39.

Le bloc B31 concerne l'acquisition par le calculateur 37, des mesures spécifiques au moteur 39 et plus particulièrement au système 1 de prélèvement d'air BAS. En général, chaque mesure est acquise par deux voies redondées du calculateur.

Ainsi, les données d'entrée (bloc B31) comportent une mesure de la pression ambiante P0, une mesure de pression PBAS en aval de l'échangeur thermique PCE 11, une mesure de pression PHPV en amont du PCE 11, des mesures de pression PHP et PIP des ports d'entrées HP et IP respectivement, trois mesures indépendantes de température TBAS_A, TBAS_B et TBAS-Dispatch en aval du PCE 11, des mesures de température THP et TIP des ports d'entrées HP et IP respectivement, et deux mesures de perte de charge DPBAS_A et DPBAS_B aux bornes de l'échangeur PCE 11.

Les blocs B32-B37 visent à s'assurer de la validité des mesures en les consolidant avant l'évaluation de la première estimation courante du débit d'air.

Le calculateur 37 est généralement configuré pour consolider une mesure en analysant les entrées afin de vérifier si la mesure est non aberrante. Cette analyse est réalisée au niveau logiciel du calculateur et peut comporter des tests de vraisemblance et d'écarts.

Le test de vraisemblance est basé sur la comparaison d'une entrée à un seuil minimal et un seuil maximal pour vérifier si l'entrée se trouve dans ou hors d'une plage de vraisemblance.

Le test d'écart (ou de cross-check) est réalisé entre les deux voies redondées de la mesure ou entre la mesure d'une des voies et une mesure de référence ou un modèle correspondant.

Le bloc B32 concerne la consolidation de la mesure de pression PBAS en aval du PCE 11 fournie par le capteur 9f (capteur-PBAS) utilisée dans la formule (1) pour le calcul du débit d'air.

On notera qu'il n'est pas nécessaire de redonder la mesure de pression PBAS pour le seul besoin de surveillance du système 1 de prélèvement d'air BAS. Ainsi, pour limiter le coût, l'encombrement et la masse des capteurs sur le moteur 39, la mesure de pression peut être redondée analytiquement selon un modèle de pression préétabli à partir des autres mesures de pression PHPV, PHP et PIP.

Ainsi au bloc B32, le calculateur 37 compare la mesure de pression PBAS au modèle de pression analytique de PBAS pour consolider la mesure.

On notera par ailleurs, que la pression PBAS est une mesure relative et on lui rajoute donc la pression ambiante P0 pour obtenir la mesure complète de la pression en aval du PCE 11. Ainsi, à la sortie du bloc B32, on a la mesure consolidée de la pression P.

Le bloc B33 concerne la consolidation de la mesure de température. Pour le besoin de surveillance et de régulation en température, le système 1 de prélèvement d'air BAS comporte deux mesures indépendantes de température TBAS_A et TBAS_B, chacune d'elles étant acquise par une des deux voies du calculateur 37. Ainsi, en configuration full-up (*i.e.,* les deux voies sont saines), il est possible d'assurer les fonctions de surveillance et de régulation de manière indépendante. Par contre, en configuration de « dispatch monovoie » (*i.e.,* une seule voie active et l'autre perdue), il devient impossible de réaliser ces deux fonctions indépendamment car la mesure reliée à la voie en panne est une mesure perdue. Ces cas imposent donc l'ajout d'une troisième mesure appelée TBAS-Dispatch (acquise par un autre calculateur), substituant la mesure non acquise par la voie perdue.

La mesure TBAS étant initialement redondée, le calculateur 37 met en place une stratégie de consolidation comportant les tests de vraisemblance et d'écarts. Le calculateur 37 compare d'abord chaque mesure obtenue aux seuils minimal et maximal acceptables. Lorsque les deux mesures sont saines, le calculateur 37 vérifie que les deux mesures ne sont pas en écart entre elles. Dans le cas contraire, cela veut dire que l'une des deux mesures est erronée (voire les deux). Cependant, la détection d'un écart entre les mesures ne permet pas de localiser la mesure en panne. On utilise alors la mesure TBAS-Dispatch comme arbitre pour localiser la mesure en panne afin de se reconfigurer sur la mesure saine.

Ensuite, au bloc B34, on calcule la moyenne entre la mesure consolidée de la température en aval du PCE 11 issue du bloc B33 et la température (THP ou TIP) du port d'entrée sélectionné (port HP ou port IP).

A la sortie du bloc B34, on a alors la mesure consolidée de la température T qui sera utilisée pour calculer le débit de prélèvement d'air.

Les blocs B36-B37 concernent la consolidation de la mesure de perte de charge DPBAS.

La mesure DPBAS ne répond à aucun besoin initial du système 1 de prélèvement d'air BAS, mais permet uniquement de mesurer le débit d'air prélevé. Pour les besoins de la redondance, deux capteurs 9c (capteur-DPBAS) sont installés aux bornes du PCE 11 (voir Fig. 1).

Lorsque les deux mesures de perte de charge DPBAS_A et DPBAS_B des deux voies sont saines par rapport au test de vraisemblance, le calculateur 37 réalise un test d'écart entre elles pour détecter si l'une des deux mesures est en panne (voire les deux). Cependant, la détection d'un écart entre les mesures ne permet pas de localiser la mesure en panne. Ainsi, pour arbitrer les pannes d'écart, le calculateur 37 opère un test d'écart entre la mesure de chaque voie et un modèle correspondant basé sur la mesure de débit de prélèvement d'air $W_A$ provenant d'un module numérique 51 de l'aéronef. On notera que la mesure de débit $W_A$ provenant de l'aéronef est non utilisable directement dans les logiques de contrôle moteur pour des raisons de fiabilité.

Le modèle de perte de charge est réalisé en inversant la formule (1) pour exprimer une perte de charge reconstituée $\Delta P_M$ en fonction du débit d'air $W_A$, de la pression P et de la température T selon la formule suivante :

$$\Delta P_M = -P + \sqrt{P^2 + 2TkW_A^\alpha} \qquad (2)$$

Ainsi, au bloc B36, on calcule la perte de charge reconstituée $\Delta P_M$ en fonction d'une mesure de débit d'air $W_A$ issue de l'aéronef, de la pression P issue du bloc B32 et de la température T issue du bloc B34 selon la formule ci-dessus.

Au bloc B37, le calculateur 37 opère un test d'écart sur les mesures DPBAS_A et DPBAS_B pour détecter des pannes. Si aucune panne d'écart n'est levée (i.e. les deux mesures DPBAS sont saines), le calculateur 37 sélectionne la moyenne des deux mesures DPBAS_A et DPBAS_B. En revanche, si une panne d'écart est levée (i.e. une des deux mesures est erronée), le calculateur 37 sélectionne la mesure la plus proche de la perte de charge reconstituée $\Delta P_M$.

Au bloc B38, le calculateur 37 détermine une valeur courante consolidée de débit d'air en évaluant une estimation courante intermédiaire $W_i$ du débit d'air prélevé sur le moteur 39 d'aéronef en fonction des mesures consolidées de perte de charge $\Delta P$, de pression $P$ et de température $T$, selon la formule suivante :

$$W_i = \sqrt[\alpha]{\frac{\left(P + \frac{\Delta P}{2}\right) \times \Delta P}{T \times k}} \qquad (3)$$

Avantageusement, le calculateur corrige l'estimation courante $W_i$ intermédiaire du débit d'air en tenant compte des imprécisions $\varepsilon_P$, $\varepsilon_T$, $\varepsilon_{\Delta P}$, et $\varepsilon_k$ relatives aux mesures de pression, de température et de perte de charge relevées par les capteurs ainsi que de la constante expérimentale $k$, respectivement.

En effet, la Fig. 7 montre de manière très schématique les éventuelles erreurs commises sur la mesure de débit en fonction du débit d'air prélevé.

La courbe pleine C31 représente l'erreur commise sur l'estimation de débit d'air et la courbe en pointillé C32 indique la tolérance maximale permise au-delà de laquelle on entre dans la zone de pompage. Ces courbes sont données ici de manière très schématique et à titre indicatif et dépendent bien entendu des spécificités du moteur.

On notera qu'à faible débit (i.e. inférieur à environ 15kg/min), l'erreur commise sur l'estimation de débit est assez élevée et dépasse la courbe de tolérance C32. En outre, la variation de la courbe d'erreur C31 par rapport à la courbe de tolérance C32 ne permet pas d'exprimer l'erreur de mesure par une simple constante ou par une simple loi en fonction du débit.

Avantageusement, au bloc B381, le calculateur exprime l'erreur courante $E_W$ de débit en pourcentage du produit $kW^\alpha$ et estime cette erreur $E_W$ selon une somme quadratique des erreurs courantes individuelles relatives à chacune des mesures engendrées par leurs imprécisions $\varepsilon_P$, $\varepsilon_T$, $\varepsilon_{\Delta P}$, et $\varepsilon_k$, selon la formule suivante :

$$E_W = \sqrt{\left(\frac{\varepsilon_P}{P + \frac{\Delta P}{2}}\right)^2 + \left(\frac{\varepsilon_T}{T}\right)^2 + \left(\frac{\varepsilon_{\Delta P}}{\Delta P} + \frac{\varepsilon_{\Delta P}}{2 \cdot \left(P + \frac{\Delta P}{2}\right)}\right)^2 + \varepsilon_k^2} \times kW_i^\alpha \qquad (4)$$

En effet, le calculateur évalue d'abord les erreurs courantes individuelles relatives à chacune des mesures. Ceci peut être réalisé en estimant l'erreur courante individuelle commise sur le produit $k \times W_i^\alpha$ par chaque imprécision de mesure selon un développement limité à l'ordre 1 ou selon un simple développement de la formule de calcul du débit.

Plus particulièrement, l'erreur courante individuelle $E_{\Delta P}$ relative à la perte de charge commise sur le produit $k \times W_i^{\alpha}$ est donnée par l'expression suivante :

$$E_{\Delta P} = \left( \frac{\varepsilon_{\Delta P}}{\Delta P} + \frac{\varepsilon_{\Delta P}}{2\left(P + \frac{\Delta P}{2}\right)} \right) \times kW_i^{\alpha}$$

L'erreur courante individuelle $E_P$ relative à la pression commise sur le produit $k \times W_i^{\alpha}$ est donnée par l'expression suivante :

$$E_P = \frac{\varepsilon_P}{P + \frac{\Delta P}{2}} \times kW_i^{\alpha}$$

L'erreur courante individuelle $E_T$ relative à la température commise sur le produit $k \times W_i^{\alpha}$ est donnée par l'expression suivante :

$$E_T = \frac{\varepsilon_T}{T} \times kW_i^{\alpha}$$

Finalement, l'erreur courante individuelle $E_k$ relative à la constante k commise sur le produit $k \times W_i^{\alpha}$ est donnée par l'expression suivante :

$$E_k = \varepsilon_k \times kW_i^{\alpha}$$

Ainsi, l'erreur courante de débit $E_W$ est calculée selon la somme quadratique des erreurs courantes individuelles relatives à chacune des mesures. La somme quadratique est justifiée par le fait que les différentes mesures sont toutes indépendantes les unes des autres et qu'elles sont entachées par des erreurs distribuées suivant une loi normale.

Il est ainsi possible d'estimer à chaque pas de temps l'erreur maximum courante susceptible d'être commise sur le produit $k \times W_i^{\alpha}$.

A titre d'exemple, l'imprécision $\varepsilon_P$ sur la pression est de l'ordre de 0,3 bar; l'imprécision $\varepsilon_T$ sur la température est de l'ordre de 10K ; l'imprécision $e_{\Delta P}$ sur la perte de charge est de l'ordre de 0,11 psi ; et l'imprécision $\varepsilon_k$ sur la constante expérimentale k est de l'ordre de 10%.

Au bloc B39, le calculateur 37 détermine une première estimation courante du débit d'air $W_1$ en calculant la différence entre l'estimation courante $W_i$ intermédiaire du débit d'air et l'erreur courante de débit $E_W$.

Autrement dit, la valeur courante de débit d'air comporte une correction basée sur la soustraction de l'erreur courante de débit d'air de l'estimation courante intermédiaire du débit d'air. Ainsi, si l'estimation courante $W_i$ intermédiaire du débit est dispersée haute, la correction abaisse le débit à sa valeur nominale permettant de garantir la non surestimation de débit et donc d'assurer la protection du moteur vis-à-vis du phénomène de pompage.

Au bloc B40, le calculateur 37 détermine une deuxième estimation courante $W_2$ du débit d'air en sélectionnant par exemple la valeur la plus grande entre la première estimation courante $W_1$ du débit d'air issue du bloc B39 et la donnée courante de débit d'air minimale $W_{ECS}$ issue du bloc B413 et définie à partir des tables de débit, de la commande Cd du pilote et de l'altitude Alt (bloc B411).

En outre, au bloc B43, le calculateur 37 évalue une troisième estimation courante $W_3$ du débit d'air en augmentant la deuxième estimation courante $W_2$ du débit d'air par une valeur courante supplémentaire $W_{NAI}$ du débit d'air nacelle antigivrage prélevé sur le moteur 39. L'estimation de la valeur courante supplémentaire $W_{NAI}$ est basée sur la perméabilité de la nacelle antigivrage NAI 19 et la régulation du débit de la nacelle antigivrage NAI 19 par une saturation en pression effectuée par la vanne NAIV 7e (voir Fig. 1).

La présente invention vise aussi à ajuster la valeur seuil courante de débit de carburant (ou butée d'accélération B) du moteur de manière à conserver une bonne marge d'accélération en tenant compte de la valeur courante de débit d'air. La détermination de la valeur courante de débit d'air peut être basée sur la première $W_1$, la seconde $W_2$, ou la troisième $W_3$ estimation courante du débit d'air. Le choix entre les différentes estimations de débit d'air peut résulter d'un compromis entre simplicité et optimisation de l'ajustement de la butée d'accélération.

**Revendications**

1. Procédé de contrôle d'un moteur d'aéronef, comportant :

   - une détermination en temps réel du débit d'air prélevé sur un moteur d'aéronef par un système de prélèvement d'air du moteur, comprenant les étapes suivantes :

      - acquisition à des instants successifs de mesures de grandeurs physiques de température, de pression et de perte de charge, spécifiques au système de prélèvement d'air (1),
      - évaluation à chaque instant courant desdits instants successifs d'une première estimation courante ($W_1$) du débit d'air prélevé sur le moteur d'aéronef (39) sur la base desdites mesures de grandeurs physiques,
      - acquisition audit instant courant d'une donnée courante ($W_{ECS}$) de débit d'air minimale définie à partir des tables de débit prédéterminées et en fonction de l'altitude de l'aéronef,
      - sélection audit instant courant de ladite première estimation courante du débit d'air ou de ladite donnée courante de débit d'air minimale pour former une deuxième estimation courante ($W_2$) du débit d'air, la sélection étant réalisée en fonction de la précision de la première estimation courante, et en ce que ledit procédé de contrôle comprend en outre un ajustement d'une valeur seuil courante de débit de carburant du moteur en tenant compte de ladite deuxième estimation courante ($W_2$) du débit d'air de manière à conserver une marge d'accélération.

2. Procédé selon la revendication 1, **caractérisé en ce que** ladite sélection comporte la sélection de la valeur la plus grande entre ladite première estimation courante ($W_1$) du débit d'air et ladite donnée courante ($W_{ECS}$) de débit d'air minimale.

3. Procédé selon la revendication 1 ou 2, **caractérisé en ce qu'**il comporte

   - une détermination audit instant courant d'une troisième estimation courante ($W_3$) du débit d'air en augmentant ladite deuxième estimation courante du débit d'air par une valeur courante supplémentaire de débit d'air nacelle antigivrage prélevé sur le moteur, et
   - un ajustement d'une valeur seuil courante de débit de carburant du moteur en tenant compte de ladite troisième estimation courante ($W_3$) du débit d'air.

4. Procédé selon l'une quelconque des revendications précédentes, **caractérisé en ce qu'**il comporte une vérification du caractère non aberrant desdites mesures de grandeurs physiques avant l'évaluation de ladite première estimation courante du débit d'air.

5. Procédé selon l'une quelconque des revendications précédentes, **caractérisé en ce que** l'évaluation de ladite première estimation courante comporte les étapes suivantes :

   - calcul audit instant courant d'une estimation courante intermédiaire du débit d'air prélevé sur le moteur d'aéronef (39) en fonction desdites mesures de grandeurs physiques,
   - calcul audit instant courant d'une erreur courante (Ew) de débit engendrée par des imprécisions relatives auxdites mesures de grandeurs physiques, et
   - correction audit instant courant de ladite estimation courante intermédiaire du débit d'air en lui soustrayant ladite erreur courante de débit déterminant ainsi ladite première estimation courante du débit d'air.

6. Procédé selon l'une quelconque des revendications précédentes, **caractérisé en ce que** la perte de charge est mesurée aux bornes d'un échangeur thermique (11) dudit système (1) de prélèvement d'air.

7. Procédé selon l'une quelconque des revendications précédentes, **caractérisé en ce que** lesdites tables de débit sont des consignes de prélèvement d'air pour le conditionnement de la cabine de l'aéronef, et **en ce que** ladite donnée courante de débit d'air minimale est définie en fonction de la configuration sélectionnée dans lesdites tables de débit et de l'altitude de l'aéronef.

**8.** Système de contrôle d'un moteur d'aéronef comprenant :

un dispositif de détermination en temps réel du débit d'air prélevé sur un moteur (39) d'aéronef par un système (1) de prélèvement d'air du moteur, ledit système de détermination comportant :

- des moyens d'acquisition (33) pour acquérir à des instants successifs des mesures de grandeurs physiques de température, de pression et de perte de charge, spécifiques au système de prélèvement d'air (1),
- des moyens de calcul (35) adaptés à évaluer à chaque instant courant desdits instants successifs une première estimation courante ($W_i$) du débit d'air prélevé sur le moteur d'aéronef (39) sur la base desdites mesures de grandeurs physiques,
- des moyens d'acquisition (33) pour acquérir audit instant courant une donnée courante ($W_{ECS}$) de débit d'air minimale définie à partir des tables de débit prédéterminées et en fonction de l'altitude de l'aéronef, et
- des moyens de calcul (35) adaptés à sélectionner audit instant courant, ladite première estimation courante du débit d'air ou ladite donnée courante de débit d'air minimale pour former une deuxième estimation courante ($W_2$) du débit d'air, la sélection étant réalisée en fonction de la précision de la première estimation courante,

le système de de contrôle comprenant en outre des moyens adaptés pour ajuster une valeur seuil courante de débit de carburant du moteur en tenant compte de ladite deuxième estimation courante ($W_2$) du débit d'air de manière à conserver une marge d'accélération.

**9.** Calculateur de contrôle d'un moteur d'aéronef, configuré pour implémenter le procédé de contrôle d'un moteur d'aéronef selon l'une quelconque des revendications 1 à 7 et exécuté par le système de contrôle d'un moteur d'aéronef selon la revendication 8.

**Patentansprüche**

**1.** Verfahren zum Überwachen eines Flugzeugtriebwerks, das Folgendes umfasst:

- Bestimmen der Luftströmungsrate, die an einem Flugzeugtriebwerk durch ein System zur Luftentnahme aus dem Triebwerk entnommen wird, in Echtzeit, umfassend die folgenden Schritte:
- Erfassen von Messungen der physikalischen Größen der Temperatur, des Drucks und des Druckverlusts, die für das Luftentnahmesystem (1) spezifisch sind, zu aufeinanderfolgenden Zeitpunkten,
- Auswerten der aufeinanderfolgenden Zeitpunkte einer ersten aktuellen Schätzung ($W_1$) der vom Flugzeugtriebwerk (39) entnommenen Luftströmungsrate auf der Grundlage der Messungen der physikalischen Größen zu jedem aktuellen Zeitpunkt,
- Erfassen eines aktuellen Datenelements ($W_{ECS}$) über die minimale Luftströmungsrate, das anhand vorbestimmter Strömungsratentabellen und in Abhängigkeit von der Flugzeughöhe definiert ist, zu dem aktuellen Zeitpunkt,
- Auswählen der ersten aktuellen Schätzung der Luftströmungsrate oder des aktuellen Datenelements über die minimale Luftströmungsrate zu dem aktuellen Zeitpunkt, um eine zweite aktuelle Schätzung ($W_2$) der Luftströmungsrate zu bilden, wobei das Auswählen in Abhängigkeit von der Genauigkeit der ersten aktuellen Schätzung durchgeführt wird, und dass das Überwachungsverfahren ferner ein Anpassen eines aktuellen Schwellenwerts für die Kraftstoffmenge des Triebwerks unter Berücksichtigung der zweiten aktuellen Schätzung ($W_2$) umfasst, so dass ein Beschleunigungsspielraum erhalten bleibt.

**2.** Verfahren nach Anspruch 1, **dadurch gekennzeichnet, dass** das Auswählen das Auswählen des größten Werts zwischen der ersten aktuellen Schätzung ($W_1$) der Luftströmungsrate und dem aktuellen Datenelement ($W_{ECS}$) über die minimale Luftströmungsrate umfasst.

**3.** Verfahren nach Anspruch 1 oder 2, **dadurch gekennzeichnet, dass** es Folgendes umfasst

- Bestimmen einer dritten aktuellen Schätzung ($W_3$) der Luftströmungsrate zu dem aktuellen Zeitpunkt, indem die zweite aktuelle Schätzung der Luftströmungsrate um einen zusätzlichen aktuellen Wert der Luftströmungsrate der Vereisungsschutz-Gondel erhöht wird, der vom Triebwerk entnommen wird, und
- Anpassen eines aktuellen Schwellenwerts für die Kraftstoffmenge des Triebwerks unter Berücksichtigung der dritten aktuellen Schätzung ($W_3$) der Luftströmungsrate.

**4.** Verfahren nach einem der vorhergehenden Ansprüche, **dadurch gekennzeichnet, dass** es ein Überprüfen der Nichtabweichung der Messungen der physikalischen Größe vor dem Auswerten der ersten aktuellen Schätzung der Luftströmungsrate umfasst.

**5.** Verfahren nach einem der vorhergehenden Ansprüche, **dadurch gekennzeichnet, dass** das Auswerten der ersten aktuellen Schätzung die folgenden Schritte umfasst:

- Berechnen einer aktuellen Zwischenschätzung der vom Flugzeugtriebwerk (39) entnommenen Luftströmungsrate in Abhängigkeit von den Messungen der physikalischen Größen zu dem aktuellen Zeitpunkt,
- Berechnen eines aktuellen Strömungsratenfehlers (Ew), der durch Ungenauigkeiten in Bezug auf die Messungen der physikalischen Größen verursacht wird, zu dem aktuellen Zeitpunkt, und
- Korrigieren, zu dem aktuellen Zeitpunkt, der aktuellen Zwischenschätzung der Luftströmungsrate durch Subtrahieren des aktuellen Strömungsratenfehlers, wodurch die erste aktuelle Schätzung der Luftströmungsrate bestimmt wird.

**6.** Verfahren nach einem der vorhergehenden Ansprüche, **dadurch gekennzeichnet, dass** der Druckverlust an den Anschlüssen eines Wärmetauschers (11) des Luftentnahmesystems (1) gemessen wird.

**7.** Verfahren nach einem der vorhergehenden Ansprüche, **dadurch gekennzeichnet, dass** die Strömungsratentabellen Luftentnahmesollwerte für die Klimatisierung der Flugzeugkabine sind und dass das aktuelle Datenelement für die minimale Luftströmungsrate in Abhängigkeit von der Konfiguration definiert wird, die in den Tabellen der Strömungsraten und der Flugzeughöhe ausgewählt wird.

**8.** System zum Überwachen eines Flugzeugtriebwerks, das Folgendes umfasst:

eine Echtzeit-Bestimmungsvorrichtung der Luftströmungsrate, die an einem Flugzeugtriebwerk (39) durch ein System (1) zur Luftentnahme aus dem Triebwerk entnommen wird, wobei das Bestimmungssystem Folgendes umfasst:

- Erfassungsmittel (33) zum Erfassen von Messungen der physikalischen Größen der Temperatur, des Drucks und des Druckverlusts, die für das Luftentnahmesystem (1) spezifisch sind, zu aufeinanderfolgenden Zeitpunkten,
- Rechenmittel (35), die dazu ausgelegt sind, zu jedem aktuellen Zeitpunkt die aufeinanderfolgenden Zeitpunkte einer ersten aktuellen Schätzung ($W_1$) der vom Flugzeugtriebwerk (39) entnommenen Luftströmungsrate auf der Grundlage der Messungen der physikalischen Größen auszuwerten,
- Erfassungsmittel (33) zum Erfassen eines aktuellen Datenelements ($W_{ECS}$) über die minimale Luftströmungsrate, das anhand vorbestimmter Strömungsratentabellen und in Abhängigkeit von der Flugzeughöhe definiert ist, zu dem aktuellen Zeitpunkt,
- Rechenmittel (35), die dazu ausgelegt sind, zu dem aktuellen Zeitpunkt die erste aktuelle Schätzung der Luftströmungsrate oder das aktuelle Datenelement über die minimale Luftströmungsrate auszuwählen, um eine zweite aktuelle Schätzung ($W_2$) der Luftströmungsrate zu bilden, wobei das Auswählen in Abhängigkeit von der Genauigkeit der ersten aktuellen Schätzung durchgeführt wird,

wobei das Überwachungssystem ferner Mittel umfasst, die dazu ausgelegt sind, einen aktuellen Schwellenwert für die Kraftstoffmenge des Triebwerks unter Berücksichtigung der zweiten aktuellen Schätzung ($W_2$) anzupassen, so dass ein Beschleunigungsspielraum erhalten bleibt.

**9.** Computer zum Überwachen eines Flugzeugtriebwerks, der dazu konfiguriert ist, das Verfahren zum Überwachen eines Flugzeugtriebwerks nach einem der Ansprüche 1 bis 7 zu implementieren, das durch das System zum Überwachen eines Flugzeugtriebwerks nach Anspruch 8 ausgeführt wird.

**Claims**

**1.** A method for controlling an aircraft engine, including:

- determining in real-time the air flowrate taken from an aircraft engine by an engine air sampling system, comprising the following steps:

- acquiring, at successive instants, measurements of physical quantities of temperature, pressure and pressure drop, specific to the air sampling system (1),
- evaluating, at each current instant of said successive instants, a first current estimate ($W_1$) of the air flowrate taken from the aircraft engine (39) on the basis of said measurements of physical quantities,
- acquiring, at said current instant, a current minimum air flowrate data ($W_{ECS}$) defined from the predetermined flowrate tables and according to the altitude of the aircraft,
- selecting, at said current instant, said first current estimate of the air flowrate or said current minimum air flowrate data to form a second current estimate ($W_2$) of the air flowrate, the selection being carried out according to the precision of the first current estimate, and in that said control method further comprises an adjustment of a current threshold value of engine fuel flowrate taking into account said second current estimate ($W_2$) of the air flowrate so as to maintain a margin for acceleration.

2. The method according to claim 1, **characterized in that** said selection includes the selection of the largest value between said first current estimate ($W_1$) of the air flowrate and said current minimum air flowrate data ($W_{ECS}$).

3. The method according to claim 1 or 2, **characterized in that** it includes

- determining, at said current instant, a third current estimate ($W_3$) of the air flowrate by increasing said second current estimate of the air flowrate by an additional current value of anti-icing nacelle air flowrate taken from the engine, and
- adjusting a current threshold value of engine fuel flowrate taking into account said third current estimate ($W_3$) of the air flowrate.

4. The method according to any one of the preceding claims, **characterized in that** it includes a verification of the non-aberrational nature of said measurements of physical quantities before the evaluation of said first current estimate of the air flowrate.

5. The method according to any one of the preceding claims, **characterized in that** the evaluation of said first current estimate includes the following steps:

- calculating, at said current instant, an intermediate current estimate of the air flowrate taken from the aircraft engine (39) as a function of said measurements of physical quantities,
- calculating, at said current instant, a current flowrate error ($E_w$) generated by inaccuracies relating to said measurements of physical quantities, and
- correcting, at said current instant, said intermediate current estimate of the air flowrate by subtracting said current flowrate error thereby determining said first current estimate of the air flowrate.

6. The method according to any one of the preceding claims, **characterized in that** the pressure drop is measured across a heat exchanger (11) of said air sampling system (1).

7. The method according to any one of the preceding claims, **characterized in that** said flowrate tables are air sampling instructions for conditioning the cabin of the aircraft, and **in that** said current minimum air flowrate data is defined according to the configuration selected in said flowrate tables and the altitude of the aircraft.

8. An aircraft engine control system comprising:
a device for determining in real time the air flowrate taken from an aircraft engine (39) by a system (1) for sampling air from the engine, said determination system including:

- acquisition means (33) for acquiring, at successive instants, measurements of physical quantities of temperature, pressure and pressure drop, specific to the air sampling system (1),
- calculation means (35) adapted to evaluate, at each current instant of said successive instants, a first current estimate ($W_1$) of the air flowrate taken from the aircraft engine (39) on the basis of said measurements of physical quantities,
- acquisition means (33) for acquiring, at said current instant, a current minimum air flowrate data ($W_{ECS}$) defined from the predetermined flowrate tables and according to the altitude of the aircraft, and
- calculation means (35) adapted to select at said current instant, said first current estimate of the air flowrate or said current minimum air flowrate data to form a second current estimate ($W_2$) of the air flowrate, the selection being carried out according to the precision of the first current estimate, the control system further comprising means adapted to adjust a current threshold value of engine fuel flowrate taking into account said second current estimate ($W_2$) of the air flowrate so as to maintain a margin for acceleration.

9. An aircraft engine control calculator, configured to implement the aircraft engine control method according to any one of claims 1 to 7 and executed by the aircraft engine control system according to claim 8.

FIG.1

FIG.2

FIG.3

FIG.4

EP 2 917 705 B1

FIG.5

FIG.6

EP 2 917 705 B1

FIG.7

FIG.8A

FIG.8B

FIG.8C

FIG.8D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1116655 A
- EP 0507725 A
- WO 2009094734 A
- EP 1444428 A